# EUROPÄISCHE PATENTSCHRIFT

(11) **EP 2 241 115 B1**
(45) Veröffentlichungstag und Bekanntmachung des Hinweises auf die Patenterteilung: **17.05.2017**
(21) Anmeldenummer: 09708494.1
(22) Anmeldetag: 06.02.2009
(51) Int. Cl.: H04Q 1/14

(54) **VERTEILERMODUL UND MODULARES VERTEILERFELD**
DISTRIBUTION MODULE, AND MODULAR DISTRIBUTION PANEL
MODULE DE DISTRIBUTION ET PANNEAU DE DISTRIBUTION MODULAIRE

(30) Priorität: 07.02.2008 DE 202008001740 U
(43) Veröffentlichungstag der Anmeldung: 20.10.2010
(73) Patentinhaber: trans data elektronik Gmbh, 49626 Bippen (DE)
(72) Erfinder: ENGEL, Andreas, 44135 Dortmund (DE)
(74) Vertreter: Fitzner, Uwe
(86) Internationale Anmeldenummer: PCT/EP2009/051381
(87) Internationale Veröffentlichungsnummer: WO 2009/098292

(56) Entgegenhaltungen:
- EP-A- 0 647 072
- DE-A1- 10 355 017
- DE-B3- 10 339 844
- DE-B3-102004 043 763

## Beschreibung

Die vorliegende Erfindung betrifft Verteilermodule zur Verwendung in modularen Verteilerfeldern zur Verbindung analog oder digital beschalteter Anschlussbuchsen mit weiteren Verteilerfeldern, weiterführenden Leitungen oder Endgeräten, wobei das Verteilermodul mehrere Anschlussbuchsen an einer Frontseite aufweist.
Aus der DE 295 101 85 U1 sind Verteilerfelder, insbesondere für Datenleitungen bekannt, mit welchen durch eine gute Abschirmung hohe Übertragungsraten erzielt werden sollen. Um dies zu erreichen, werden Verteilerfelder mit einer Bodenplatte und einer Frontplatte eingesetzt, wobei die Frontplatte Aussparungen zur Verbindung eines Kabelkontaktes mit einer auf der Rückseite der Frontplatte angeordneten Steckbuchse aufweisen, wobei die Steckbuchsen auf einer mit Anschlussklemmen versehenen Platine angeordnet sind, die auf der Bodenplatte befestigt werden. Das Verteilerfeld insgesamt besitzt ein allseits geschlossenes Gehäuse mit Einführungsmöglichkeiten für Kabel an der Rückseite. Die Verbindungen der Anschlussbuchsen mit weiterführenden Leitungen erfolgt durch eine 1:1 Verkabelung jeder Buchse mit jeweils einem Anschlusskabel. Nachteilig an diesen Verteilerfeldern ist die mangelnde Flexibilität beim Wechseln der Verteilerkonfiguration, da in diesem Fall jedes Mal die manuell aufgelegten Kabel entfernt und neu aufgelegt werden müssen.
Aus der DE 20 2008 001 740 sind Verteilermodule und modulare Verteilerfelder bekannt, wobei die Verteilermodule ein allseits geschlossenes geschirmtes Gehäuse mit mehrerern Anschlussbuchsen an einer Frontseite und auf der der Frontseite gegenüberliegenden Rückseite einen Steckverbinder aufweisen, welcher durch eine entsprechende Verkabelung im Gehäuse des Verteilermoduls mit mehreren Anschlussbuchsen an der Frontseite des Gehäuses verbunden ist.

Das Dokument DE102004043763, ADC GMBH, veröffentlicht am 02-02-2006, offenbart zusätzlich ein derartiges Verteilungsmodul.

Die Direktverdrahtung von modularen Verteilermodulen mit mehreren Anschlussbuchsen ist bislang nur durch eine 1:1 Verkabelung jeder einzelnen Buchse realisiert, d.h., bei Modulen mit beispielsweise sechs Anschlussbuchsen an der Vorderseite werden auch entsprechend sechs Kabel zur Direktverdrahtung benötigt. Dies führt insbesondere bei Verteilerfeldern, bei denen auf kleinstem Raum eine maximale Anzahl von Anschlussbuchsen unterzubringen ist, zu einer sehr hohen Anzahl von Kabeln. Beispielsweise würden für ein Verteilerfeld der Baubreite 19 Zoll und der Höhe 1 HE, auf welchem mit den Modulen gemäß dem DE 20 2008 001 740 bis zu 48 RJ-45 Anschlussbuchsen untergebracht werden könnten, entsprechend 48 Anschlusskabel benötigt. Der Raumbedarf dieser Verkabelungslösung ist häufig mit den vorgegebenen baulichen Gegebenheiten in Büro - und sonstigen Gebäuden nicht zu realisieren. Weder sind gegebenenfalls vorhandene Kabelkanäle für eine derartige Anzahl von Kabeln ausgelegt, noch lassen sich eine derartige Vielzahl von Kabeln bei entsprechend festgelegten baulichen Gegebenheiten in einer wirtschaftlich vertretbaren Weise einziehen.

Darüber hinaus führt die hohe Anzahl an erforderlichen Kabeln zu einer erheblichen Gewichtsbelastung, die an die Grenzen der statischen Belastbarkeit vorhandener Gebäudekonstruktionen reichen kann. Schließlich führt die hohe Anzahl von Kabeln auch zu hohen Brandlasten, was sicherheitstechnisch unerwünscht ist.

Es bestand daher der Bedarf an Verteilermodulen, mit denen einerseits eine maximale Performance erreicht werden kann und andererseits die vorstehend geschilderten Nachteile hinsichtlich Gewicht und Belastung im Brandfall vermieden werden.

Erfindungsgemäß wird diese Aufgabe durch die Verteilermodule bzw. Verteilerfelder gemäß Oberbegriff des Anspruchs 1 gelöst, wobei die Verteilermodule ein allseits geschlossenes geschirmtes Gehäuse aufweisen und mehrere Anschlussbuchsen des Verteilermoduls mittels eines einzigen Kabels mit einer einzigen äußeren Hülle direkt verdrahtet sind..

Bevorzugte Ausführungsformen der erfindungsgemäßen Verteilermodule bzw. Verteilerfelder sind den Unteransprüchen und der nachfolgenden Beschreibung zu entnehmen.

Durch die Verwendung eines allseits geschlossenen Gehäuses in Verbindung mit der Direktverdrahtung von mehreren, vorzugsweise mindestens 6 Anschlussbuchsen an der Frontseite eines erfindungsgemäßen Verteilermoduls durch ein einziges Kabel werden hohe Datenübertragungsraten bei gleichzeitig minimiertem Raumbedarf ermöglicht. Damit lassen sich mit den erfindungsgemäßen Verteilermodulen Übertragungsgeschwindigkeiten erreichen, wie sie in heute üblichen modernen sogenannten Gigabit-Netzwerken oder sogar 10 Gigabit-Netzwerken gefordert werden (Performance nach Klassifizierung Cat.5e oder Cat.6A).

Unter Einzelmodul wird im folgenden ein allseits geschlossenes Element mit einer Anschlussbuchse an einer Frontseite und der Möglichkeit einer Verkabelung an der der Frontseite gegenüberliegenden Rückseite verstanden. Als Verteilermodul wird im Unterschied dazu ein Element verstanden, welches mehrere Anschlussbuchsen an einer Frontseite aufweist und eine gemeinsamen Verkabelung aller Anschlussbuchsen des Verteilermoduls an der der Frontseite entgegengesetzten Rückseite erlaubt. Ein Verteilermodul kann demzufolge aus mehreren entsprechend zueinander angeordneten Einzelmodulen mit jeweils eigenem allseits geschlossenem Gehäuse bestehen, ohne dass um diese Mehrheit an Einzelmodulen noch ein weiteres allseits geschlossenes Gehäuse zwingend erforderlich ist; durch die Verwendung eines solchen allseits geschlossenen Gehäuses können jedoch Vorteile erzielt werden, weshalb dies eine bevorzugte Ausführungsform darstellt. Alternativ kann ein Verteilermodul auch mehrere Anschlussbuchsen ohne eigenes allseits geschlossenes Gehäuse für jede einzelne Anschlussbuchse aufweisen, wobei ein allseits geschlossenes Gehäuse um diese mehrere Anschlussbuchsen des Verteilermoduls vorhanden ist.

Gemäß einer bevorzugten Ausführungsform werden .in den erfindungsgemäßen Verteilermodulen Einzelmodule mit einem allseits geschlossenen Gehäuse und jeweils einer Anschlussbuchse, vorzugsweise einer RJ 45 Anschlussbuchse, eingesetzt. Jedes dieser Einzelmodule ist durch das allseits geschlossene Gehäuse sehr gut abgeschirmt, was hohe Datenvolumina und Übertragungsgeschwindigkeiten ermöglicht, wie sie in modernen Netzwerken heute verlangt werden. Bei dieser Ausführungsform sind vorzugsweise mindestens sechs der Einzelmodule rückseitig derartig zueinander angeordnet, dass ein Kabel der erforderlichen Anzahl an Aderpaaren (bei 6 RJ45 Buchsen sind dies 24 Adernpaare) mit einer äußeren Hülle zur direkten Verdrahtung der vorzugsweise mindestens sechs RJ-45 Buchsen verwendet wird. Die rückseitige Anordnung zueinander muss dabei lediglich sicherstellen, dass mit nur einem Kabel eine Verdrahtung mit den Anschlussbuchsen mehrerer Einzelmodule möglich ist. Von diesem Erfordernis abgesehen, kann die relative Anordnung der Einzelmodule beliebig erfolgen und an bauliche oder andere Anforderungen flexibel angepasst werden.

Gemäß einer besonders bevorzugten Ausführungsform können mehrere solcher Einzelmodule zusammen beispielsweise in einem eigenen allseits geschlossenen Gehäuse untergebracht werden, was die Abschirmung und damit die anwendungstechnischen Eigenschaften weiter verbessert. Module gemäß dieser Ausführungsform unterscheiden sich rein äußerlich nicht von den erfindungsgemäßen Verteilermodulen gemäß der nachstehend beschriebenen weiteren bevorzugten Ausführungsform.

Gemäß einer weiteren bevorzugten Ausführungsform weist das erfindungsgemäße Verteilermodul an der Frontseite mehrere Anschlussbuchsen (vorzugseise RJ45 Buchsen) auf. Bevorzugt weisen die erfindungsgemäßen Module bei dieser Ausführungsform mindestens 6 RJ-45 Buchsen in einer Reihe auf. Dabei können die Module bei einer Einbauhöhe von 1 HE ein- oder zweireihig gestaltet sein. Weiterhin ist es aufgrund der flachen Bauweise gemäß einer bevorzugten Ausführungsform der erfindungsgemäßen Verteilermodule auch möglich zwei Einzelmodule bei einer Gesamt-Einbauhöhe von 1 HE übereinander anzuordnen. Dabei können zwei gleiche Module eingesetzt werden oder aber zwei unterschiedliche Module mit unterschiedlichen Anschlusstechniken übereinander angeordnet werden ohne dass die Gesamthöhe von 1 HE überschritten wird.

Grundsätzlich sind auch Module mit einer Einbauhöhe von mehr als 1 HE möglich, was insbesondere bei der Gestaltung von Verteilermodulen mit internen Konvertern zum Übergang zwischen verschiedenartigen Verbindungsmöglichkeiten an Front- und Rückseite der erfindungsgemäßen Verteilermodule von Vorteil sein kann.

Für eine vollständige digitale Beschaltung von RJ-45-Anschlussbuchsen werden 8 Anschlussadern benötigt. Bei einem Modul mit 6 RJ-45-Anschlussbuchsen muss daher zur vollständigen digitalen Beschaltung das zur Verdrahtung verwendete Kabel mindestens 24 Aderpaare aufweisen.

Die erfindungsgemäßen Verteilerfelder weisen ein oder mehrere erfindungsgemäße Verteilermodule auf. Dabei können auch gemischte Verteilerfelder zur Anwendung kommen, die Verteilermodule mit Verbindungsmöglichkeiten über optische Lichtwellenleiter neben den erfindungsgemäßen Verbindungsmöglichkeiten über RJ-45-Anschlussbuchsen bieten. Durch die innerhalb des Gehäuses des Verteilermoduls vorhandene Verbindung der frontseitigen Anschlussbuchsen mit der rückseitigen Direktverdrahtung per Kabel und der Ausführung des Verteilermoduls mit einem allseits geschlossenen Gehäuse ist diese gemischte Anordnung verschiedener Verteilermodule problemlos möglich, was einen weiteren Vorteil der erfindungsgemäßen Verteilerfelder darstellt. Die Anordnung der unterschiedlichen Verteilermodule im erfindungsgemäßen Verteilerfeld kann dabei nebeneinander oder aber, ohne die Einbauhöhe 1 HE zu überschreiten, auch übereinander erfolgen.

Eine weitere vorteilhafte Möglichkeit ist der Einsatz sogenannter Konvertermodule, d.h. erfindungsgemäßen Verteilermodulen, die frontseitig eine Gestaltung mit RJ-45 Anschlussmöglichkeit und eine Anschlussmöglichkeit für Lichtwellenleiterkabel an der Rückseite des Moduls aufweisen. Bei dieser Ausführungsform enthält das Modul im Innern des allseits geschlossenen Gehäuses die erforderlichen aktiven Komponenten zur Realisierung dieser Anschlussmöglichkeit.

Die erfindungsgemäßen Verteilerfelder können zur Verbindung mehrerer Verteileranlagen, zum Anschluss weiterführender Leitungen oder aber zum Anschluss von Endgeräten dienen. Besonders eignen sie sich zur einfachen Herstellung von festen oder mobilen Gebäudeverkabelungen, da die Zahl der einzubringenden Kabel und der im Verteilerfeld aufzulegenden Kabel minimiert ist.

Als besonderer technisch relevanter Vorteil ist hervorzuheben, dass mit den erfindungsgemäßen Verteilerfeldern unter Verwendung der erfindungsgemäßen Verteilermodule bei einer Einbauhöhe von 1 HE und einer Einbaubreite von 19" aufgrund der guten Abschirmung 48 voll beschaltete RJ45-Verbindungen mit einer Performance gemäß Cat.5 e bzw. Cat.6 oder besser möglich sind, was bislang nicht erreicht werden konnte.

Statt RJ 45 Buchsen können die erfindungsgemäßen Verteilermodule auch jede Art von anderen Anschlussbuchsen aufweisen, wenn dies vorteilhaft ist. Die Vorteile der erfindungsgemässen Module kommen immer dann zum Tragen, wenn eine herkömmliche 1:1-Verkabelung mit einer Vielzahl von Kabeln zu Gewichts- Platz und Performanceproblemen führen kann. Derzeit sind für Netzwerkverkabelungen mit metallhaltigen Kabeln RJ 45 Buchsen am gebräuchlichsten; prinzipiell kann jedoch jede beliebige Art von Anschlussbuchse verwendet werden. Proprietäre Lösungen mit speziellen Anschlussbuchsen sind ebenfalls denkbar.

Bei Verkabelungslösungen mit Lichtwellenleitern sind die Gewichtseinsparungen und die Reduzierung der Brandlast nicht so ausgeprägt wie bei metallhaltigen Leitern, doch sind auch solche erfindungsgemässen Verteilermodule ohne weiteres möglich.

Um die mit dem Verteilermodul bzw. den Verteilerfeldern, die die erfindungsgemäßen Verteilermodule enthalten, erreichten hohen Abschirmungsgrad auch bei der weiterführenden Verkabelung aufrecht zu erhalten, ist es vorteilhaft, auch für diese weiterführende Verkabelung hochwertig abgeschirmte Verteilerkabel zu verwenden.

Vorzugsweise werden zum Anschluss der Verteilermodule mit vorzugsweise mindestens 6 Anschlussbuchsen (vorzugsweise RJ 45 Anschlussbuchsen) Verbindungskabel verwendet, die mindestens 24 Aderpaare und nur eine äußere Hülle aufweisen und darüber hinaus einen hohen Abschirmungsgrad.

Die erfindungsgemäßen Verteilermodule und Verteilerfelder können auf vielfältige Weise in bestehende Einrichtungen zur Verkabelung integriert werden. So ist eine Montage auf sogenannten Hutschienen ebenso denkbar wie die einfache Integration in Standard Baugruppenträgern, insbesondere solchen mit der Breite 19 ". Die Anordnung der erfindungsgemäßen Verteilermodule bzw. Verteilerfelder kann dabei horizontal oder vertikal erfolgen, abhängig von den vorgegebenen baulichen Gegebenheiten. Entsprechende Montagesyteme und Möglichkeiten sind dem Fachmann an sich bekannt. Nur beispielhaft seien hier Befestigungssysteme mit sogenannten Clip-Verbindern genannt, die ein einfaches Wechseln von Komponenten möglich machen.

Durch den geringen Raumbedarf der erfindungsgemäßen Verteilermodule und der Verteilerfelder lassen diese sich auch insbesondere in sogenannten Bodentanks oder in Kabelkanälen einsetzen. Auch in sogenannten Consolidation points können die erfindungsgemäßen Verteilermodule bzw. Verteilerfelder vorteilhaft eingesetzt werden. Bei all diesen Anwendungen wirkt sich die Flexibilität, die mit den erfindungsgemäßen Modulen bei gleichzeitig geringem Raumbedarf erreicht wird, wirtschaftlich vorteilhaft für die Kosten einer Systemverkabelung aus. Zudem können in Bodentanks oder Kabelkanälen bei gleichem Raumbedarf eine höhere Anzahl von Anschlussbuchsen platziert werden, als dies bislang der Fall war. Auch dies hat wirtschaftliche Vorteile, da damit mehr Teilnehmer bei gleichem Platz- und Raumbedarf vernetzt werden können, als dies bislang möglich war. Bodentanks und Kabelkanäle sind dem Fachmann an sich bekannt und in der einschlägigen Literatur beschrieben, so dass sich hier weitere Ausführungen erübrigen. Prinzipiell sind die erfindungsgemäßen Verteilermodule bzw. Verteilerfelder in jeder beliebigen Art von Kabelkanal oder Bodentank verwendbar.

Auch Systeme mit sogenannten Consolidation points sind dem Fachmann an sich bekannt und in der Literatur beschrieben, so dass sich nähere Angaben hier erübrigen. Wiederum können die erfindungsgemäßen Verteilermodule bzw. Verteilerfelder in beliebigen derartigen Systemlösungen eingesetzt werden.

Ein weiterer Vorteil der erfindungsgemäßen Verteilermodule ist darin zu sehen, dass trotz der festen Verdrahtung mehrerer Buchsen die Zahl der Kabel gering gehalten werden kann, was zu einer deutlichen reduzierung des Platzbedarfs und dami zu einer Ikeichteren Einziehbarkeit in Kanäle führt. Erforderliche Durchbrüche können deutlich kleiner ausgeführt werden als bei einer Klassischen Verkabelung ohne den Vorteil der optimalen Performance durch die Verdrahtung der Module direkt bei der Produktion zu verlieren. Aufwendige Anschlussarbeiten am Ort der Montage, die häufig zu Lasten der Performance gehen, können weitgehend vermieden werden.

Die Erfindung wird nachstehend anhand der beigefügten Abbildungen näher erläutert. Dabei zeigen:
- Fig 1 -: die Frontansicht eines erfindungsgemäßen Verteilermoduls
- Fig. 2 -: die Rückansicht eines erfindungsgemäßen Verteilermoduls
- Fig. 3 -: ein Verteilermodul mit abgenommener Gehäuseoberseite und
- Fig. 4 -: ein Verteilerfeld mit 8 erfindungsgemäßen Verteilermodulen von der Vorderseite betrachtet

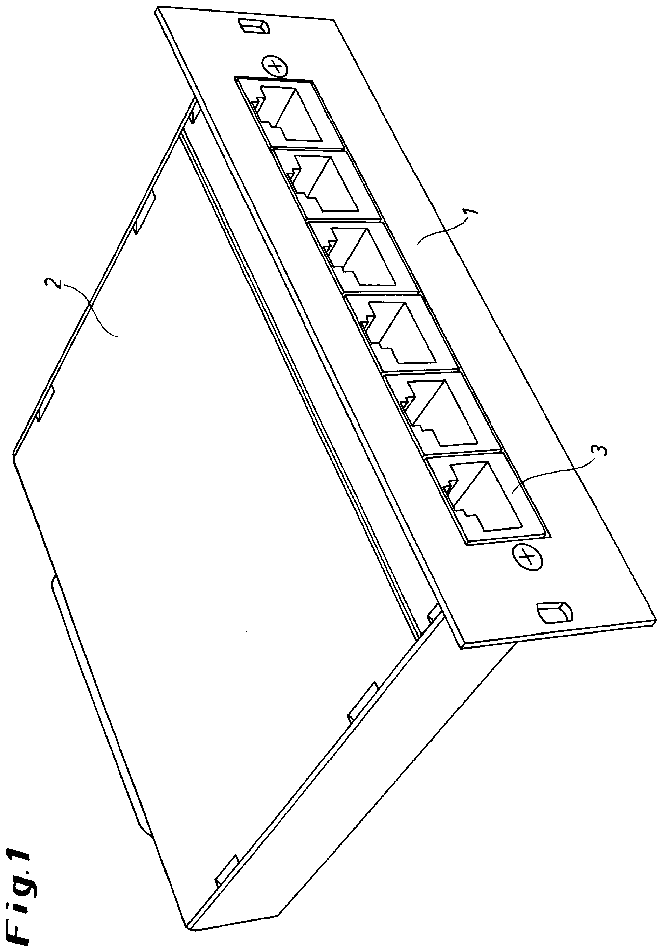

In Fig. 1 ist ein erfindungsgemäßes Verteilermodul 1 in Frontansicht dargestellt, wobei das allseits geschlossene Anschlussgehäuse 2 und die vorderseitigen RJ-45 Anschlussbuchsen (3) dargestellt sind.

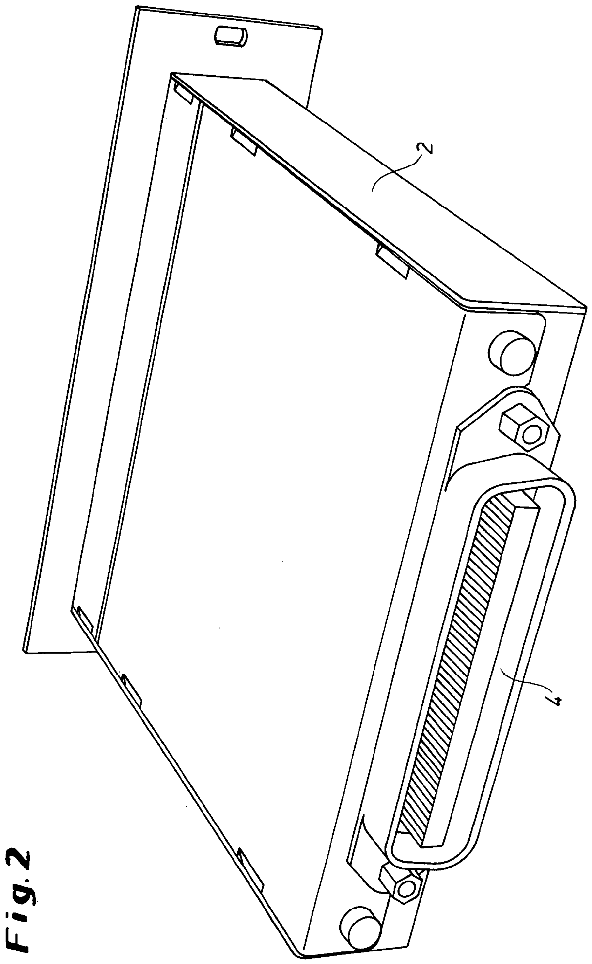

Fig. 2 zeigt ein erfindungsgemäßes Verteilermodul 1 mit allseits geschlossenem Gehäuse 2 von der Rückseite, wodurch die Direktverdrahtung von 6 Buchsen mit einem Kabel mit einer äußeren Hülle erkennbar ist.

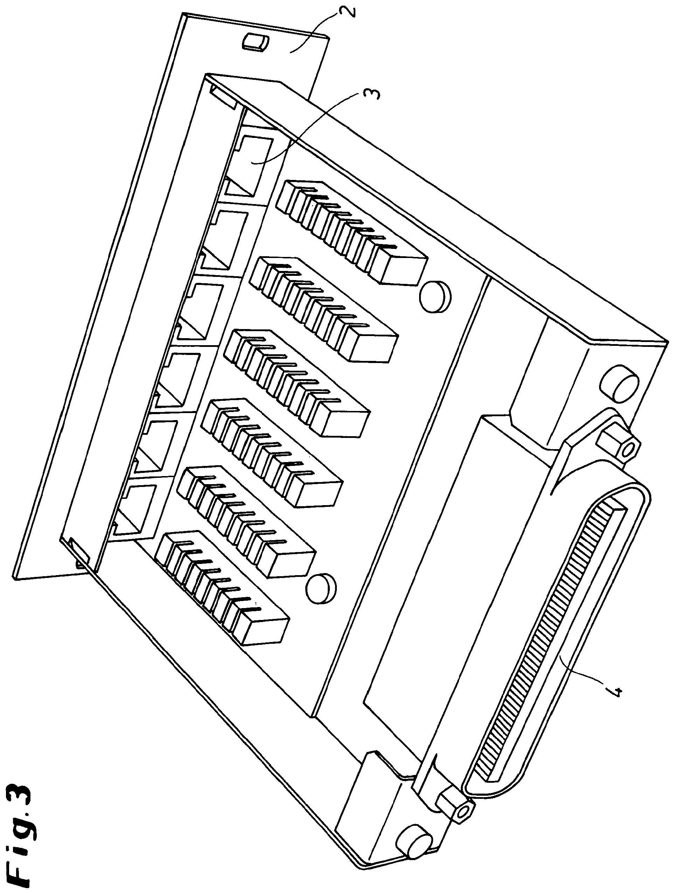

In Fig. 3 ist ein erfindungsgemäßes Verteilermodul mit abgenommener Gehäuseoberseite dargestellt, aus der die Art der internen Verbindung der vorderseitigen RJ-45 Anschlussbuchsen 3 mit dem Kabelanschluss erkennbar ist.

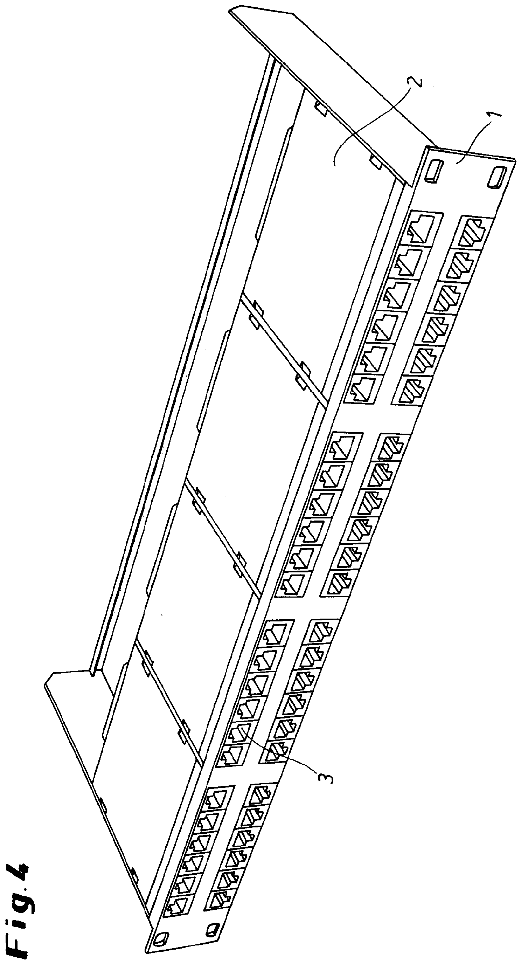

Fig. 4 zeigt ein erfindungsgemäßes Verteilerfeld 5 mit 8 erfindungsgemäßen Verteilermodulen 1 mit allseits geschlossenem Gehäuse 2, wobei die Verteilermodule zweireihig übereinander angeordnet sind und jeweils 6 RJ-45 Anschlussbuchsen 3 an der Vorderseite aufweisen.

Die Erfindung ist vorstehend anhand einiger Ausführungsformen beschrieben; sie ist aber nicht auf diese Ausführungsformen beschränkt. Wesentlich ist, dass durch die gehäuseinnere Verbindung von Steckverbindern 4 mit Anschlussbuchsen 3, die in ihrer Gestaltung beliebig in dem Fachmann bekannter Weise gewählt werden können, eine einfache und schnelle Verkabelung auch bei komplexen Verkabelungssituationen erreicht werden kann. Auch besitzen die so aufgebauten Verteilersysteme eine hohe Flexibilität bei Änderungen der Konfiguration.

## Patentansprüche

1. Verteilermodul (1) zur Verwendung in modularen Verteilerfeldern zur Verbindung analog oder digital geschalteter Anschlussbuchsen mit weiteren Verteilerfeldern oder weiterführenden Leitungen oder Endgeräten, wobei das Verteilermodul (1) mehrere Anschlussbuchsen (3) an einer Frontseite aufweist, **dadurch gekennzeichnet, dass**
a) das Verteilermodul (1) ein allseits geschlossenes geschirmtes Gehäuse (2) aufweist und
b) alle Anschlussbuchsen (3) der Frontseite des Verteilermoduls (1) an der der Frontseite entgegengesetzten Rückseite (4) mittels eines einzigen Kabels mit einer einzigen äußeren Hülle verdrahtet sind.

2. Verteilermodul nach Anspruch 1, **dadurch gekennzeichnet,**
**dass** es an der Frontseite RJ-45 Anschlussbuchsen (3) aufweist.

3. Verteilermodul nach einem der Ansprüche 1 oder 2, **dadurch gekennzeichnet, dass** es an der Frontseite mindestens 6 RJ 45 Anschlussbuchsen (3) aufweist.

4. Verteilerfeld zur Verbindung mit weiteren Verteilerfeldern oder mit weiterführenden Leitungen oder Endgeräten, **dadurch gekennzeichnet, dass** es ein oder mehrere Verteilermodule gemäß einem der Ansprüche 1 bis 3 enthält.

5. Verteilerfeld nach Anspruch 4 mit mehreren Verteilermodulen gemäß einem der Ansprüche 1 oder 2, **dadurch gekennzeichnet,**
**dass** bei einer Baubreite von 19 Zoll und der Höhe 1 HE bis zu 48 Anschlussbuchsen angeordnet sind.

6. Verteilerfeld nach Anspruch 4 oder 5 **dadurch gekennzeichnet, dass** es sich bei den Anschlussbuchsen (3) um RJ 45 Buchsen handelt.

7. Verteilerfeld nach einem der Ansprüche 4 bis 6, **dadurch gekennzeichnet, dass** es bei einer Einbaubreite von 19 Zoll und einer Einbauhöhe von 1 HE bis zu 8 Verteilermodule gemäß einem der Ansprüche 1 bis 3 enthält.

8. Verwendung der Verteilermodule nach einem der Ansprüche 1 bis 3 oder der Verteilerfelder nach einem der Ansprüche 4 bis 7 zum Einbau in Kabelkanälen, Bodentanks oder Consolidation points.

9. Verwendung der Verteilermodule nach einem der Ansprüche 1 bis 3 oder der Verteilerfelder nach einem der Ansprüche 4 bis 7 für die Montage auf einer Hutschiene.

## Claims

1. Distribution module (1) for the use in modular distribution panels for connecting analogously or digitally switched connection sockets with other distribution panels or continuing lines or terminal devices, the distribution module (1) comprising a plurality of connecting sockets (3) at one front side **characterised in that**
a) the distribution module (1) has on all sides a well closed housing (2) and
b) all connection sockets (3) of the front side of the distribution module (1)
are wired at the back side (4) opposite to the front side with a single exterior
envelope.

2. Distribution module as claimed in claim 1, **characterised in that** it has RJ-45 connection sockets (3) at the front side.

3. Distribution module as claimed in one of claims 1 or 2, **characterised in that** it has at least 6 RJ-45 connection sockets (3) at the front side.

4. Distribution panel for the connection with other modular distribution panels or with continuing lines or terminal devices **characterised in that** it comprises one or more distribution modules according to one of claims 1 to 3.

5. Distribution panel as claimed in claim 4 with several distribution modules according to one of claims 1 or 2, **characterised in that** at a paving width of 19 inches and an installation height of 1 HE up to 48 connecting sockets are arranged.

6. Distribution panel as claimed in claims 4 or 5, **characterised in that** the connection sockets (3) are RJ 45 sockets.

7. Distribution panel as claimed in any of claims 4-6, **characterised in that** at a paving width of 19 inches and an installation height of 1 HE it has up to 8 distribution modules as claimed in any of claims 1 to 3.

8. Use of the distribution modules as claimed in any of claims 1 to 3 or of he distribution panels according to any of claims 4 to 7 for the installation in cable channels, ground tanks or consolidation points.

9. Use of the distribution modules as claimed in any of claims 1 to 3 or of the distribution panels according to any of claims 4 to 7 for the installation on a tophat- rail.

## Revendications

1. Module de distribution (1) pour l'utilisation dans les panneaux modulaires pour la connection des douilles de raccordement qui sont couplées dans une manière analogue ou digitale avec d'autres panneaux de distribution ou des câbles continuants ou des apareils terminaux, le module de distribution (1) comprenant plusieures douilles de raccordement (3) à un devant, characterisé en ce que
a) le module de distribution (1) comporte un boîtier fermé et isolé de tous les côtés (2) et
b) toutes les douilles de raccordement (3) au devant du module de distribution (1) à l'arrière opposée du devant (4) sont raccordés par un seul câble avec une seule enveloppe exterieure.

2. Module de distribution selon la revendication 1, characterisé en ce qu'il y a des RJ-45 douilles (3) au devant.

3. Module de distribution module selon la revendication 1 ou 2, characterisé en ce qu 'il y a au moins 6 RJ-45 douilles de raccordement (3) au devant.

4. Panneau de distribution pour la connection avec d' autres panneaux de distribution ou avec des câbles additionels ou des apareils terminaux characterisé en ce que ce comprend un module ou plusieurs modules de distribution selon l'une des revendications 1 to 3.

5. Panneau de distribution selon la revendication 4 avec plusieurs modules de distribution selon l'une des revendications 1 ou 2, characterisé en ce que 48 modules de distribution sont arrangés á une largeur de construction de 19 pouces et une hauteur d'installation de 1 HE.

6. Panneau de distribution selon des revendications 4 or 5, characterisé en ce que les douilles de raccordement (3) sont des douilles RJ 45.

7. Panneau de distribution selon une des revendications 4 à 6, characterisé en ce qu'à une largeur d'installation de 19 pouces et une hauteur d'installation de 1 HE ce comporte jusqu'à 8 modules de distribution modules selon l'une des revendications 1 à 3.

8. Utilisation des modules de distribution selon l'une des revendications 1 to 3 ou des panneaux de the distribution selon l'une des revendications 4 à 7 pour l' installation dans des goulottes électriques, des réservoirs au sol ou des points de consolidation.

9. Utilisation des modules de distribution selon l'une des revendications 1 to 3 ou des panneaux de distribution selon l'une des revendications 4 à 7 pour l'installation sur un profilé chapeau.
